(19) Europäisches Patentamt
European Patent Office
Office européen des brevets

(11) **EP 3 842 113 B1**

(12) **EUROPEAN PATENT SPECIFICATION**

(45) Date of publication and mention
of the grant of the patent:
**17.07.2024 Bulletin 2024/29**

(21) Application number: **20207625.3**

(22) Date of filing: **13.11.2020**

(51) International Patent Classification (IPC):
**B01D 29/11** (2006.01)    **B01D 29/33** (2006.01)
**B01D 29/46** (2006.01)    **B01D 35/02** (2006.01)
**E21B 43/08** (2006.01)

(52) Cooperative Patent Classification (CPC):
**B01D 29/46; B01D 29/111; B01D 29/33;**
**B01D 35/02; E21B 43/08; E21B 43/127**

(54) **FILTER OF SOLID PARTICLES FOR OIL, GAS AND WATER, PROCEDURE FOR ASSEMBLING SAID FILTER, PROCEDURE FOR ASSEMBLING A PIPE STRUCTURE INSIDE THE CASING OF A WELL IN ORDER TO INSTALL THE FILTER AND SAID PIPE STRUCTURE**

FILTER AUS FESTEN PARTIKELN FÜR ÖL, GAS UND WASSER, VERFAHREN ZUM ZUSAMMENBAU DES FILTERS, VERFAHREN ZUR MONTAGE EINER ROHRSTRUKTUR IM INNEREN DES GEHÄUSES EINES BOHRLOCHS FÜR DIE INSTALLATION DES FILTERS UND DER ROHRSTRUKTUR

FILTRE À PARTICULES SOLIDES POUR L'HUILE, LE GAZ ET L'EAU, PROCÉDURE D'ASSEMBLAGE DE CE FILTRE, PROCÉDURE D'ASSEMBLAGE D'UNE STRUCTURE DE TUBE À L'INTÉRIEUR DU TUBAGE D'UN PUIT AFIN D'INSTALLER LE FILTRE ET LADITE STRUCTURE DE TUBE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.12.2019 AR P190103815**

(43) Date of publication of application:
**30.06.2021 Bulletin 2021/26**

(73) Proprietor: **Marcelo Cerna, Isidro**
**CP8300 Neuquén (AR) (AR)**

(72) Inventor: **Marcelo Cerna, Isidro**
**CP8300 Neuquén (AR) (AR)**

(74) Representative: **Gonzalez Palmero, Fé et al**
**Calle Sagasta, 4**
**28004 Madrid (ES)**

(56) References cited:
**EP-A2- 0 388 849**    **WO-A1-2017/030700**
**US-A- 1 995 850**    **US-A- 3 009 519**
**US-A- 3 789 924**

EP 3 842 113 B1

**Description**

**Technical field of the invention**

The present invention refers to sand filters for oil, gas, and water, preferably installed in oil wells with mechanical pumps as well as electric submersible pumps and oil collection and filtration equipment.

**State of the art**

Normally, the most widely used filters are designed with the structure of a bored steel pipe coated with a stainless-steel filter mesh.

These filters have the problem of suffering corrosion due to being exposed to the corrosive chemical agents present in crude oil.

They are also highly prone to carbonate scaling, which leads to the gradual obstruction of the passage of fluid during the use thereof.

This leads to the filters requiring a high level of maintenance in order to prevent extraction performance from decreasing, so they must be removed from the well in order to be cleaned and/or changed. Since they are built with heavy materials, the weight thereof makes them difficult to handle and transport.

Finally, at the end of the lifespan thereof, the residues produced by using these non-recyclable filters cause significant pollution to the environment.

In order to address these drawbacks, the patent application No P060100890, published under AR055317A1, proposed a filter comprising a headpiece made of carbon steel treated with epoxy that is resistant to the physical and chemical damage caused by crude oil, on which the assembly of rings made of a material derived from plastic is supported by means of three adjuster tensioners made of 4140 carbon steel, distributed symmetrically at 120° around the headpiece in order to attach and support the rings, and to correctly adjust the filtration body. The adjustment is carried out by means of a plate made of polyamide 6 (grilon) with three housings that make it possible to carry out the final adjustment of the filter using nuts of the 2-way lock type. Finally, the stoppers against corrosion are also made of polyamide 6 (grilon) and they are pressure-fitted in order to prevent corrosive fluids from entering the housings, preventing in this way the deterioration of the fixing elements, that is, the adjustment tensioners and nuts. Both the length of the filter as well as the areas in which the fluid passes between the calibrated rings can be adapted to the needs of the users of the filter.

Although the filter proposed in AR055317A1 addresses the problem of corrosion since the steel part exposed to contact with oil is minimal and has a cladding against corrosion, while at the same time being less prone to carbonate build-ups from adhering to the material, it has the drawback of being difficult to assemble and disassemble due to the number of parts involved in the system of tensioners used to fix the rings to the filter.

Therefore, it is necessary to have a filter in which the rings can be easily placed and adjusted without having to use tensioners and nuts, thus improving the maintenance tasks.

In addition, the filter should comprise a filtration surface made of a plastic material that is resistant to corrosive agents, as well as a cladding for the metal parts exposed to corrosion. Similarly, the rings should be made of a plastic material less prone to carbonate build-ups adhering to the material, preventing the formation of scaling.

Additionally, most of the materials employed in manufacturing the filter are recyclable, so the environment is unaffected.

In sum, in addition to the advantages of the known filter, the aim is to make the filter even more light weight to make it easier to handle during the assembly and transportation thereof, thus optimising time and costs.

The document WO2017030700 discloses a sand screen including a base pipe. A plurality of individual segments having complementary perimetrically interlocking shapes configured to be nested together so as to limit relative movement among the elements and to form a tubular filtration media about the base pipe. End rings engaging the filtration media and the base pipe. The plurality of segments include offsets to space certain faces of the plurality of elements from mating faces of the plurality of elements to create radial fluid passageways through the filtration media.

**Explanation of the invention**

Therefore, the object of the present invention is a filter of solid particles for oil, gas and water according to claim 1.

Preferably, the filtration area has a length between 1000 mm and 1500 mm.

Also preferably, the pipe, the at least two supporting rings and the at least one intermediate separating ring are made of iron, stainless steel, carbon steel, bronze, fibreglass, polyester resin, polyvinyl chloride (PVC), polypropylene (PP), and combinations thereof.

More preferably, the pipe, the at least two supporting rings and the at least one intermediate separating ring are made of 4140 carbon steel or stainless steel.

Even more preferably, the pipe, the at least two supporting rings and the at least one intermediate separating ring are made of iron, carbon steel or bronze, they are covered by a cladding selected among epoxies, acrylonitrile butadiene styrene (ABS) polytetrafluoroethylene (PTFE), nylons, vinyl and thermally cured ceramic claddings.

Even more preferably yet, the epoxy cladding is a epoxy phenolic resin.

Preferably, the pipe has an internal diameter between 19 mm (3/4 of an inch) and 508 mm (20 inches).

More preferably, the perforations are selected among circular orifices, horizontal slots, vertical slots, oblique slots, and combinations thereof.

Even more preferably, the relation per linear metre between the span of the perforations and the diameter of the pipe is between 2:1 and 8:1.

Preferably, the plastic material the filtration rings are made of is selected between polypropylene, polyamide and polytetrafluoroethylene.

Particularly, the polyamide is polyamide 6 (grilon) or polyamide 66.

More preferably, the plurality of inner extensions of the filtration rings providing support on and separation from the pipe are between 3 and 10, preferably 4.

Even more preferably, there are between 2 and 5 perpendicular guiding extensions fitting into corresponding fitting perforations of the rings, which are placed on the internal extensions providing support on and separation from the pipe.

Even more preferably, the plurality of supports distributed along the perimeter on one side of the filtration rings are between 5 and 10, preferably 8.

Even more preferably yet, the separation between the filtration rings is between 200 and 2000 microns, preferably 500 microns.

Also more preferably, the fixing means of the at least two supporting rings and the at least one intermediate separating ring are at least one captive screw, preferably 3 to 6 captive screws, more preferably 4 captive screws.

Additionally, each housing of the at least one captive screw is closed by a plug protecting against corrosion, which is made of polypropylene, polyamide and polytetrafluoroethylene that is pressure fitted.

Particularly, the polyamide is polyamide 6 (grilon) or polyamide 66.

Also particularly, the working conditions of the filter for solid particles of the present invention are temperatures between 50 °C (122 °F) and 150 °C (302 °F).

Another object of the present invention is a procedure for assembling a filter of solid particles according to claim 20.

Yet another object of the present invention is a procedure for assembling a pipe structure inside the casing of a well according to claim 21.

Additionally, the procedure comprises coupling a pump to the pipe structure.

In addition, when the filter is applied to the oil exploration, the pumping method is selected among mechanical pumping (a pumpjack), progressive cavity pumping (PCP) or electric submersible pumping.

Yet another object of the present invention is a pipe structure comprising the following from the bottom of the well to the top: a reducer coupler, at least one tail pipe, at least one filter of solid particles according to the present invention, followed by an assembly of pipes, wherein all the elements are joined together in fluid communication, and wherein the pipe structure is connected to a suitable pump or device for pumping the fluid being extracted, which is installed in the appropriate place according to the pumping method used and the fluid extracted.

Preferably, the at least one tail pipe is one or two pipes connected together reaching a length between 10 and 20 metres, with an internal diameter between 73 mm (2 7/8 inches) and 889 mm (3.5 inches), alternatively reaching a length of 30 metres by adding an additional pipe.

Also, preferably the lower end of the tail pipes is threaded to a reducer coupler with an internal diameter between 73 mm (2 7/8 inches) and 38.1 mm (1.5 inches), up to between 889 mm (3 1/2 inches) and 38.1 mm (1.5 inches).

**Brief description of the figures**

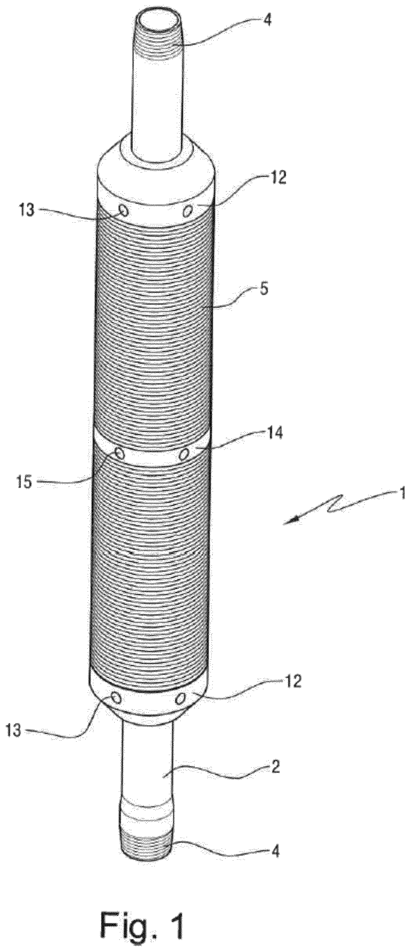

Figure 1 is a perspective view of a preferred embodiment of the filter of solid particles for oil, gas and water according to the present invention.

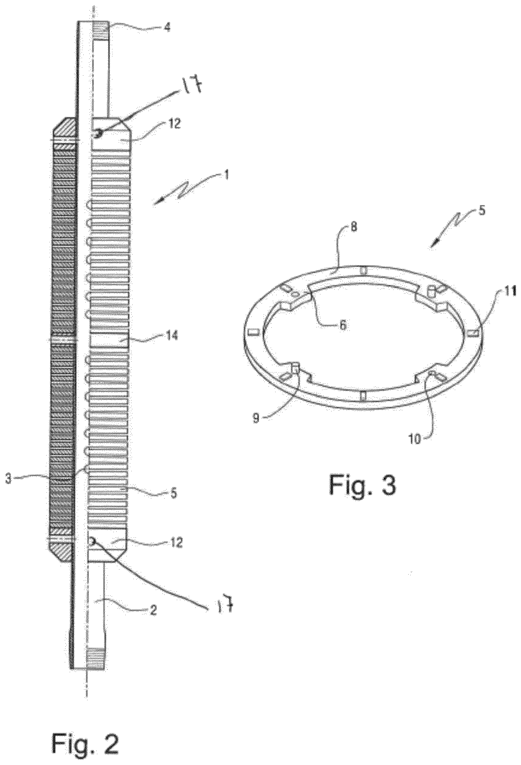

Figure 2 is a perspective view of the filter of solid particles for oil, gas and water of Figure 1, with cutaways showing the relative location and composition of the internal parts.

Figure 3 is a perspective view of a preferred embodiment of a filtration ring comprised in the filter of the present invention.

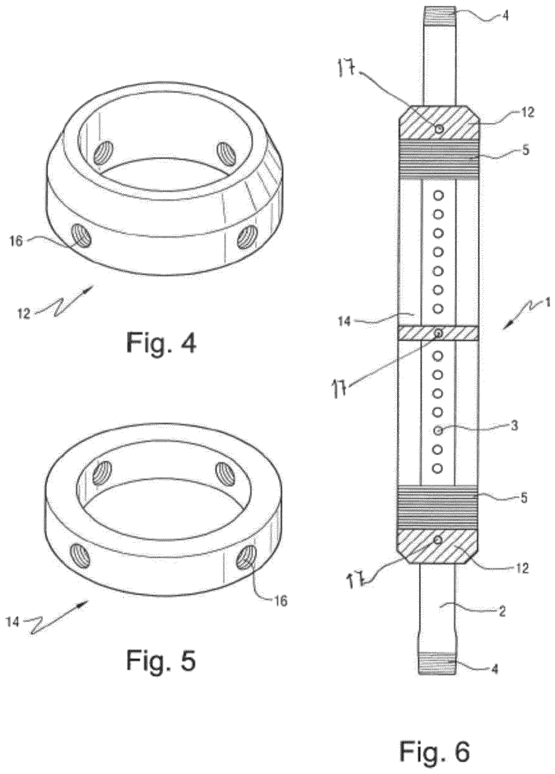

Figure 4 is a perspective view of a preferred embodiment of a supporting ring comprised in the filter of the present invention.

Figure 5 is a perspective view of a preferred embodiment of an intermediate separating ring comprised in the filter of the present invention.

Figure 6 is another perspective view of the filter of solid particles for oil, gas and water of Figure 1, with cutaways showing the relative location and composition of the internal parts.

Figure 7 shows a scheme of the testing bank used during Test 3.

Figure 8 shows the graph of pressure variation against flow rate resulting from the data obtained in Test 3.

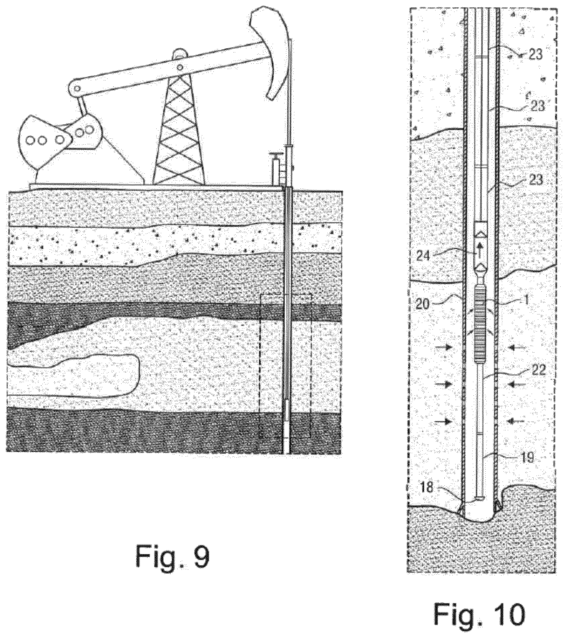

Figure 9 shows a scheme of the filter according to the present invention, which is integrated to a pipe structure of a mechanical pumping equipment.

Figure 10 shows a detail of a bottom of a well where the filter according to the present invention is installed with a mechanical pumping equipment.

## Detailed description of the invention

With the aim of addressing the drawbacks of the prior art, the present invention refers to a filter of solid particles (1) for oil, gas and water that comprises a headpiece comprising:

a pipe (2) substantially resistant to the chemical and physical damage caused by the material to be filtered, with the surface of said pipe defining a filtration area comprising a plurality of perforations (3) that allow fluid to pass through the wall of the pipe (2), wherein said pipe (2) comprises nuts (4) on the ends thereof;

a plurality of filtration (5) rings made of a plastic material assembled in a concentric shape on said filtration area of the pipe (2), said rings (5) being placed in parallel on top of each other, and wherein each of the rings (5) comprises a plurality of internal extensions (6) providing support on and separation from the pipe (2), defining a space for the fluid (7) to circulate between the inner borders of the rings (5) and the surface of the pipe (2), and one of the surfaces (8) of each ring (5) comprises perpendicular guiding extensions (9) that fit into corresponding fitting perforations (10) present in the neighbouring rings (5), and a plurality of supports (11) distributed along the perimeter on one side of the ring (5), with the height thereof providing a distance of separation determined by the particle to be trapped; and

at least two supporting rings (12) mounted on the pipe (2) and placed on each end of the set of filtration rings (5), adjusting and defining at least one section wherein each of said supporting rings (12) is adjusted on the pipe (2) by fixing means (13).

Additionally, the set of filtration rings (5) comprises at least one intermediate separating ring (14), wherein said intermediate separating ring (14) is adjusted on the pipe (2) by fixing means (15).

More than one filtration area can be assembled on one pipe (2), said assembly being comprised of a plurality of filtration rings (5) fixed by means of respective supporting rings (12) and eventually, also incorporating at least one intermediate separating ring (14) along the length of the filtration area.

The at least two supporting rings (12) have the function of keeping the body of filtration rings (5) pressed together, ensuring that there is no relative movement between them. In turn, the at least one intermediate separating ring (14) allows the filtration rings (5) to be more secure, preventing warping and decreasing the risks of damage being caused to these filtering elements.

Also preferably, the length of the filtration area is between 1000 mm and 1500 mm.

Regarding the manufacturing materials, both the pipe (2), the at least two supporting rings (12) and the at least one intermediate separating ring (14) are made of iron, stainless steel, carbon steel, bronze, fibreglass, polyester resin, polyvinyl chloride (PVC), polypropylene (PP), and combinations thereof. Preferably, the pipe (2), the at least two supporting rings (12) and the at least one intermediate separating ring (14) are made of 4140 carbon steel or stainless steel.

When the pipe (2), the at least two supporting rings (12) and the at least one intermediate separating ring (14) are made of iron, carbon steel or bronze, they are covered by a cladding selected among epoxies, acrylonitrile butadiene styrene (ABS) polytetrafluoroethylene (PTFE), nylons, vinyl and thermally cured ceramic claddings. Preferably, the epoxy cladding is an epoxy phenolic resin.

The main goal of choosing the manufacturing materials of the different parts of the filter (1) according to the present invention is, firstly, to prevent scaling and adhesions blocking the filter (1), and therefore affecting the performance and output thereof, and secondly, to protect against the corrosion and abrasion that deteriorate the integrity of the filter (1). The filters (1) of the present invention operate in extreme conditions so installing and uninstalling said filters is very costly and labour intensive, therefore, the aim is to preserve the integrity of the filter (1) and maximise the durability thereof in order to avoid the aforementioned drawbacks.

The pipe (2) of the filter (1) can have an internal diameter between 19 mm (3/4 of an inch) and 508 mm (20 inches).

In addition, the perforations (3) where the filtered subsoil fluids pass through are selected from circular orifices, horizontal slots, vertical slots, oblique slots, and combinations thereof. In the case of circular orifices, said orifices can be aligned and distributed longitudinally facing each other in parallel (in a matrix) or staggered.

In particular, with the goal of achieving a suitable performance, the relation per linear metre between the span of the perforations (3) and the diameter of the pipe (2) is between 2:1 and 8:1.

With the goal of preventing scaling and deposits of solid materials that may affect the performance of the filter (1) according to the invention, the plastic material the filtration rings (5) are made of is selected between polypropylene, polyamide and polytetrafluoroethylene. Preferably, the polyamide is polyamide 6 (grilon) or polyamide 66.

The filtration rings (5) have a particular design and structure that makes them versatile and at the same time repeat along the length of the filter (1) so that the filtration capacity is substantially constant in any area of said filter. In this way, the filtration rings (5) comprise a plurality of inner extensions (6) of the filtration rings (5) providing support on and separation from the pipe (2), which are between 3 and 10, preferably 4. On the internal supporting extensions (6) of each ring (5) there are between 2 and 5 perpendicular guiding extensions (9) that fit into corresponding fitting perforations (10) of neighbouring rings (5) in order to provide solidity to the structure of the filter (1). In addition, the filtration rings (5) comprise a plurality of supports (11) distributed along the perimeter on one side of the filtration rings (5), which are between 5 and 10, preferably 8.

The particle size that the filter (1) of the present invention blocks and prevents from passing is determined by the separation between the filtration rings (5), which is normally between 200 and 2000 microns, preferably 500 microns. Therefore, depending on the characteristics of the subsoil and the particles to be blocked, the separation between the filtration rings (5) is chosen when assembling the filter (1), which will depend on the height of the supports (11) distributed along the perimeter on one of the sides of said rings (5).

Regarding the fixing means (13, 15) used to fix the at least two supporting rings (12) and the at least one intermediate separating ring (14), preferably at least one captive screw is used, preferably 3 to 6 captive screws, more preferably 4 captive screws.

Additionally, each housing (16) of each of the captive screws is closed by a plug protecting against corrosion (17), that is made of polypropylene, polyamide and polytetrafluoroethylene, which is pressure fitted. Particularly, the polyamide is polyamide 6 (grilon) or polyamide 66.

The filter of solid particles (1) according to the present invention is assembled by placing a first supporting ring (12) on an end of a perforated pipe (2), fixing it by suitable fixing means (13) and defining one end of a filtration area, then placing a plurality of filtration rings (5), resting on and fitted into each other, on the perforated pipe (2), wherein the assembly of filtration rings (5) is rested on the first supporting ring (12) until it covers the entire filtration area. Depending on the length of the perforated pipe (2), if it was necessary to introduce at least one intermediate separating ring (14), said intermediate separating ring (14) is adjusted on the pipe by suitable fixing means (15).

The procedure for installing the filter (1) according to the present invention comprises the following stages:

a) threading a reducer coupler (18) on one end of a first tail pipe (19) and introducing said pipe (19) and coupler inside (18) the casing (20) of a well (21);
b) threading at least a second tail pipe (22) on the upper end of the first tail pipe (19) and lowering the assembly of two pipes (19,22) with the reducer coupler (18) on the lower end thereof;
c) threading at least one body of the filter (1) according to the present invention on the upper end of the assembly of tail pipes (19,22) and the reducer coupler (18);
d) threading a pipe (23) on the upper end of the body of the filter (1) and introducing said pipe (23) inside the casing (20) of the well (21); and
e) continue threading pipes (23") on the free end of the last pipe (23') inside the casing (20) of the well (21), one after the other as the filter (1) is lowered to the working depth.

In this way, a structure or row of pipes (25) is assembled inside the casing (20) of the well (21), reaching from the bottom of the well to the mouth of the well, said pipe structure (25) connecting to a suitable pump (24) or pumping device for pumping the fluid to be extracted from the subsoil, while the filter (1) of the present invention blocks the solid particles present from passing between the filtration rings (5) and the perforations (3) present on the walls of the perforated pipe (2).

In a preferred embodiment, the pipe structure (25) then comprises, from the bottom to the top: a reducer coupler (18), a first tail pipe (19) or two tail pipes, first (19) and second (22), the filter (1) that may have one or more filtration bodies, which may be on the same pipe (2) or comprised of several pipes (2) joined together, followed by a row of pipes of a plurality of pipes (23, 23', 23") connecting the filter (1) with the mouth of the well (21), with said pipe being connected to a pump (24) pumping the fluid being extracted, that is installed in the appropriate place according to the pumping method used.

The tail pipes (19, 22) are normally one or two pipes connected together reaching a length of approximately between 10 and 20 metres, with an internal diameter between 73 mm (2 7/8 inches) and 889 mm (3 1/2 inches), though they may also reach a length of 30 metres by adding an additional 10 metres long tail pipe. The lower end of the tail pipes (19, 22) have a reducer coupler (18) threaded on with the function of constituting a decanting and accumulating feed of particles of a smaller size than the one set by the separation of the filtration rings (5), which is a smaller size than the retention of the filter (1), and therefore can pass through the filter.

This decanting feed determined by the tail pipes (19, 22) is closed at the bottom thereof with a reducer coupler (18) with an internal diameter between 73 mm (2 7/8 inches) and 38.1 mm (1.5 inches), up to between 889 mm (3 1/2 inches) and 38.1 mm (1.5 inches).

In the oil exploration, the filter of solid particles (1) of the present invention can be adapted successfully to three systems of extraction: mechanical pumping (pumpjack), progressive cavity pumping (PCP) or electric submersible pumping.

Depending on the manufacturing materials used for this activity, the filter (1) according to the present invention can operate without issues at a temperature range between 50 °C (122 °F) and 150 °C (302 °F).

In a preferred embodiment, the filter (1) of the present invention comprises two sections of 3000 mm each, being suitable for casing (20) from 127 mm (5 inches) and being suitable for pipes from 60.3 mm (2 3/8 inches) up to 73 mm (2 7/8 inches).

A typical final installation of the filtration equipment comprises a filter (1) with two bodies and two tail pipes (19, 22), and a reducer coupler (18) with an orifice of 38.1 mm (1 1/2 inches).

**TESTS**

The filter of solid particles for oil, gas and water used in the Tests was typically constituted of: a central pipe with circular perforations placed longitudinally and coated with an epoxy phenolic resin with nuts on both ends, with a length of 1000 mm, 3000 mm or 4000 mm depending on the test, wherein one of the nuts was a EUE 8RD 2 7/8" nut, the filtration rings were made of polyamide, which allowed particles of a size under 500 microns to pass through once assembled, and were placed between two supporting rings made of stainless steel and fixed to the central pipe by means of 4 captive screws, while an intermediate separating ring made of stainless steel, which was also fixed with 4 captive screws, was used in order to ensure the integrity of the filtration assembly.

TEST 1

A traction test was carried out in order to determine the quality of the mechanical structure.

This test was carried out in a 120-ton hydraulic press. The central pipe resisted up to 615.9 kN (62.8 ton), this being the breaking value of the mechanical structure (pipe) mounted on said press.

TEST 2

A test was carried out on a 4000 mm long filter. The filter was installed at a depth of 260 m, remaining submerged in the subterranean aquifer constituted of a fluid with a slurry of highly abrasive solids (saline crystals, minerals with a granulometry of 50 microns to 12.7 mm (1/2") with variable cube sizes), which normally generate severe cavitation. The filter was connected in fluid communication with a TH - 300 HP-300 Brinkmann Pumps, and the filter was connected to a tail pipe with a reducer coupler on the lower end thereof.

The basin of the aquifer where the test was carried out is not renewable since the geological formation surrounding it lacks porosity. Different types of pumps and filters were tried out due to the gravitational drainage and the various drops in pressure. The filters used were normally coupled to different pumps, had a short lifespan since the high-speed flow and high content of abrasive materials blocked the cross-section passages of the fluid, hindering the passage thereof, causing a decrease in the volume of absorption and a pressure drop in the pumps, and affecting the static, kinetics and dynamics of the fluid.

A test with the filter of the present invention was carried out, which addressed and neutralised the entirety of the drawbacks. This was due to the materials of the constitutive elements being anti-abrasive and preventing the accumulation of particles in the compartments of passage of fluid, which made it possible to always maintain the same quantity of fluid with constant absorption, preventing the creation of air bubbles responsible for producing vibrations and thus preventing cavitation. The flow in a closed circuit is permanent so that heat transfer is continuously steady and does not increase the levels of transference.

The filter tested is notably lighter than the stainless-steel filters normally used for the same purpose, significantly improving the time of transportation and assembly, and it is also able to regulate the compartments of passage of fluids.

The filter of the invention can be adapted to the geological outline of each basin, while the width of the passage of other filters in the state of the art cannot be regulated since the steel coil cannot be separated more than the manufacturing measurements, and when erosion is produced and the metal is corroded, the section increases and minerals penetrate, which can cause wear on the housing and rotor of the pump and can even jam the mechanisms.

The filter of the invention has proved to be extremely practical and efficient in the environment in which it was tested. This makes it possible to wait for longer before extracting the filter, carrying out maintenance and eventually replacing it, thus reducing operative costs.

TEST 3

This test was carried out in a test bank (a) for determining the pressure drop in the filter (1) according to the present invention with a diameter of 73 mm (2 7/8") and a length of 1000 mm.

The variations in pressure displayed by the filter were determined individually. In order to do so, the test was carried out using water (b) at a flow rate ranging from 10 to 60 m3/h.

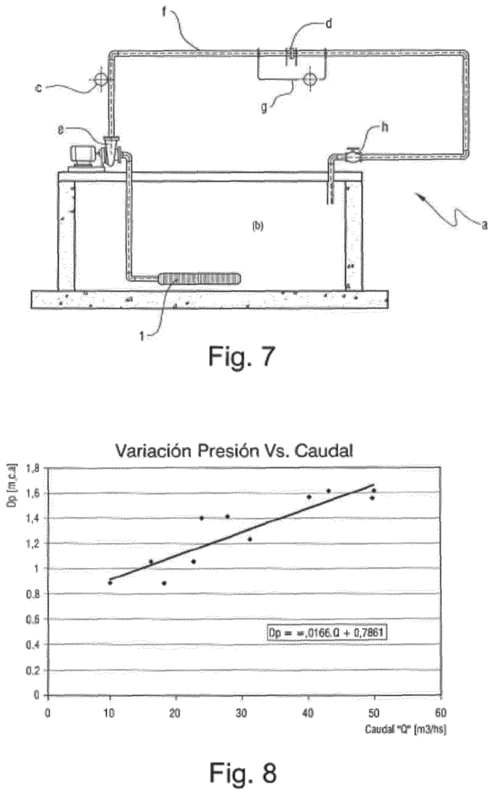

The test bank (a) had a main testing circuit of 2 1/2" (see Figure 7). Said circuit is equipped with instrumentation for primarily collecting the operating parameters of hydraulic machines. In addition, it comprises the following instrumentation: manometer (c) of 4 m.d.c.Hg, orifice plates (d), etc. The pumping circuit comprises a horizontal axis centrifugal pump (e) with a rated power of 7.5 kW.

The Bernoulli equation was used between both readings of the columns:

$$\Delta H \, [mm.c.a] = \frac{(p_1 - p_2) \, [mm]}{(\rho_{Hg}.g)}$$

The flow rate Q was measured by an orifice plate (d) with a diameter of 63.5 mm (2 1/2"), that can calculate the speed c, in the pipe (f). The differential pressure "h" through the orifice plate is measured by means of a mercury column pipe (g). The plate (d) was designed according to the BSI 1042 standard, and the equipment and/or manometers were calibrated prior to the test.

According to the rules of the IEC Standard, the value taken for the acceleration of gravity was g = 9.80665 m2/s.

The value for the density of water was 1,000 kg/m3, which falls within the ranges of the IEC 193 Standards.

The filter (1) was mounted on the circuit of the test bank (a) and tested individually with water (b).

The values measured and the processing thereof are shown in the Table further below with the different parameters collected, and the graph is representative of the differences in pressure between the input and the output of the filter (1) in relation to the flow rate entered into the unit being tested (see Figure 8). All these parameters and/or graphs are industrial in nature.

The variations in the flow rate were carried out by means of a bronze globe valve (h) with a diameter of 63.5 mm (2 ½ inches), which was placed proximate to the output of the pumping unit of the test bank (a).

Results obtained and conclusions:

The results of the test are shown in the following Table of values:

| Orifice plates | | | | | Hg Manometer | | |
|---|---|---|---|---|---|---|---|
| Upstream manometer | Downstream manometer | deltaP [psi] | deltaP [mbar] | Flow rate [m3/h] | p cm hg | delta p cm hg | delta p mca |
| 18.5 | | 12.5 | 861.844625 | 52.9292626 | -6.2 | 11.647 | 1.560698 |
| 32.5 | 24.5 | 8 | 551.58056 | 28.2445787 | -5.1 | 10.547 | 1.413298 |
| 35.5 | 29.5 | 6 | 413.68542 | 22.6034574 | -2.5 | 7.947 | 1.064898 |
| 20 | 7.5 | 12,5 | 861.844625 | 52:9292626 | -6.6 | 12.047 | 1.614298 |
| 24 | 12.5 | 11.5 | 792.897055 | 45.3274034 | -6.6 | 12.047 | 1.614298, |
| 27 | 16 | 11 | 758.42327 | 42.0596283 | -6.2 | 11.647 | 1.560698 |
| 30.5 | 21.5 | 9 | 620.52813 | 31.9234239 | -3.75 | 9.197 | 1.232398 |
| 38 | 34 | 4 | 275.79028 | 17.8351687 | -1.25 | 6.697 | 0.897396 |
| 42.5 | 41.5 | 1 | 68.94757 | 8.60249034 | -1.25 | 6.697 | 0.897398 |
| 35. | 28.5 | 6.5 | 448.159205 | 23.8655381 | -5 | 10.447 | 1.399898 |
| 40 | 37 | 3 | 206,84271 | 15.2473642 | -2.5 | 7.947 | 1.064898 |

A graph was created using these values, which is representative of the curve of the Differences in Pressure between the Input and the Output of the filter in relation to the Flow rate (see Figure 8).

With the data collected during the test and the subsequent processing thereof, we can conclude that the curve "MI v. Q" copies the shape of the curves typical in pressure drops $\Delta H = f_c$ (Q) for the entire range of flow rates under consideration and for the fluid under consideration.

TEST 4

A field test was carried out on a 3000 mm long filter according to the present invention, which was connected to two tail pipes with a reducer, and the pipe was connected to a centrifugal pump, with the filter at a depth of 220 metres. The filter of the invention was disassembled after twice the amount of time the previous filter was used, and only for the purpose of checking the state thereof.

The following qualitative conclusions were made:

1) Transporting and assembling the filter was easier throughout the entire installation procedure due to the filter being lighter than those commonly used.

2) A significant improvement was observed during the test in comparison with the filter replaced (a stainless-steel coil filter), optimising the service provided in the following ways:

a) It was observed that each of the components comprising the filter perform an essential function in the system for obtaining the desired operating conditions that make it possible to drive to the surface the volume of fluid required.

b) The impeller, used in the same operating conditions as with the filter replaced, generated a higher load quantity. It is deduced that due to the material used (polyamide) in the filtration rings comprising the filter, it succeeded in keeping the same opening without modifications nor alterations due to friction, abrasion, corrosion, scaling nor build-ups of blocking particles.

c) The effect of relative density was nullified. The load generated by an impeller does not depend on the viscosity of the fluid, with the variations in the volume driven depending instead on the power used. The efficiency of the assembly filter - pump remained constant throughout the entire Test, independently of the density of the fluid driven.

d) The absolute pressure inside the pump never fell below the saturation pressure corresponding to the operating temperature. This was due to the absence of vacuums, preventing in this way the formation of bubbles that could be dragged by the liquid towards regions with higher pressures where they could collapse or condense, which would produce a tremendous increase in pressure that could destroy the suction systems and, due to the vibration generated, the corrosion and erosion would have a significant effect on the behaviour of the pump, reducing the capacity and efficiency thereof.

e) The particles of the sediments floating under the surface and inside the suction area did not adhere to the filtration rings, so the load capacity did not change. This resulted in a longer lasting installation, which extended the periods of time between extracting the filter in order to carry out maintenance or replacements, thus improving maintenance times and positively affecting the costs thereof.

Based on the tests, we conclude that the filter of the present invention has proven the effectiveness thereof for the required purposes.

**Claims**

**1.** A filter of solid particles (1) for oil, gas, and water, having a headpiece comprising:

a pipe (2) substantially resistant to the chemical and physical damage caused by the material to be filtered, with the surface of said pipe defining a filtration area comprising a plurality of perforations (3) that allow fluid to pass through the wall of the pipe (2), wherein said pipe (2) comprises nuts (4) on the ends thereof;

a plurality of filtration (5) rings made of a plastic material assembled in a concentric shape on said filtration area of the pipe (2), said rings (5) being placed in parallel on top of each other, and wherein each of the rings (5) comprises a plurality of internal extensions (6) providing support on and separation from the pipe (2), defining a space for the fluid (7) to circulate between the inner borders of the rings (5) and the surface of the pipe (2), and one of the surfaces of each ring (5) comprises perpendicular guiding extensions (9) that fit into corresponding fitting perforations (10) present in the neighbouring rings (5), and a plurality of supports (11) distributed along the perimeter on one side of the ring (5), with the height thereof providing a distance of separation determined by the particle to be trapped;

**characterised in that** the filter further comprises at least two supporting rings (12) mounted on the pipe (2) and placed on each end of the set of filtration rings (5), adjusting and defining at least one section, wherein each of said supporting rings (12) is adjusted on the pipe (2) by fixing means (13); and at least one intermediate separating ring (14) placed between two filtration rings of the set of filtration rings (5) and being configured for separating the plurality of filtration rings (5) into a first and a second sub-sets of filtration rings (5); and wherein said intermediate separating ring (14) is adjusted on the pipe (2) by fixing means (15).

2. The filter of claim 1, wherein the filtration area has a length between 1000 mm and 1500 mm.

3. The filter of any one of the claims 1 to 2, wherein the pipe (2), the at least two supporting rings (12) and the at least one intermediate separating ring (14) are made of iron, stainless steel, carbon steel, bronze, fibreglass, polyester resin, polyvinyl chloride (PVC), polypropylene (PP), and combinations thereof.

4. The filter of claim 3, wherein the pipe (2), the at least two supporting rings (12) and the at least one intermediate separating ring (14) are made of 4140 carbon steel or stainless steel.

5. The filter of claims 3 or 4, wherein when the pipe (2), the at least two supporting rings (12) and the at least one intermediate separating ring (14) are made of iron, carbon steel or bronze, they are covered by a cladding selected among epoxies, acrylonitrile butadiene styrene (ABS) polytetrafluoroethylene (PTFE), nylons, vinyl and thermally cured ceramic claddings.

6. The filter of claim 5, wherein the epoxy cladding is an epoxy phenolic cladding.

7. The filter of any one of the claims 1 to 6, wherein the pipe (2) has an internal diameter between 19 mm (3/4 of an inch) and 508 mm (20 inches).

8. The filter of any of the preceding claims 1 to 7, wherein the perforations (3) are selected among circular orifices, horizontal slots, vertical slots, oblique slots, and combinations thereof.

9. The filter of claim 8, wherein the relation per linear metre between the span of the perforations (3) and the diameter of the pipe (2) is between 2:1 and 8:1.

10. The filter of any of the preceding claims 1 to 9, wherein the plastic material the filtration rings (5) are made of is selected between polypropylene, polyamide and polytetrafluoroethylene.

11. The filter of claim 10, wherein the polyamide is polyamide 6 (grilon) or polyamide 66.

12. The filter of claims 10 or 11, wherein the plurality of inner extensions (6) of the filtration rings (5) providing support on and separation from the pipe (2) are between 3 and 10, preferably 4.

13. The filter of claims 10 to 12, wherein there are between 2 and 5 perpendicular guiding extensions (9) fitting into corresponding fitting perforations (10) of the neighbouring rings (5), which are placed on the internal extensions (6) providing support on and separation from the pipe (2).

14. The filter of claims 10 to 13, wherein the plurality of supports (11) distributed along the perimeter on one side of the filtration rings (5) are between 5 and 10, preferably 8.

15. The filter of any of the claims 10 to 14, wherein the separation between the filtration rings (5) is between 200 and 2000 microns, preferably 500 microns.

16. The filter of any of the claims 1 to 15, wherein the fixing means (13,15) of the at least two supporting rings (12) and the at least one intermediate separating ring (14) are at least one captive screw, preferably 3 to 6 captive screws, more preferably 4 captive screws.

17. The filter of claim 16, wherein, additionally, each housing of the at least one captive screw is closed by a plug protecting against corrosion (17), which is made of polypropylene, polyamide and polytetrafluoroethylene that is pressure fitted.

18. The filter of claim 17, wherein the polyamide is polyamide 6 (grilon) or polyamide 66.

19. The filter of any of the claims 1 to 18, wherein the working conditions are temperatures between 50 °C (122 °F) and 150 °C (302 °F).

20. A procedure for assembling a filter of solid particles (1) as claimed in any one of the claims 1 to 19, wherein it comprises:

placing a first supporting ring (12) on an end of a pipe (2) with a perforated wall and fixing it to said pipe (2) by fixing means (13), defining one end of a filtration area;
placing a plurality of filtration rings (5) on the perforated pipe that rest on and fit into one another, wherein the set of filtration rings is resting on the first supporting ring (12) until they cover the entire filtration area; and
placing another supporting ring (12) on the last filtration ring and adjusting it on the perforated pipe (2) by suitable fixing means (13)
placing at least one intermediate separating ring (14) two filtration rings of the set of filtration rings (5) and being configured for separating the plurality of filtration rings (5) into a first and a second sub-sets of filtration rings (5), wherein said intermediate separating ring (14) is adjusted on the pipe (12) by suitable fixing means (15).

21. A procedure for assembling a pipe structure inside the casing of a well to install a filter of solid particles (1) as claimed in any one of the claims 1 to 19, wherein it comprises the following steps:

a) threading a reducer coupler (18) on one end of a first tail pipe (19) and introducing said tail pipe (19), and said coupler (18) in front, inside the casing (20) of a well (21);
b) threading at least a second tail pipe (22) on the upper end of the first tail pipe (19) and lowering the assembly of two tail pipes (19,22) with the reducer coupler (18) on the lower end inside the casing (20) of the well (21);
c) threading the at least one filter of solid particles (1) as claimed in any of the claims 1 to 19 on the upper end of the assembly of tail pipes (19,22) and the reducer coupler (18);
d) threading a pipe (23) on the upper end of the body of the filter (1) and introducing said pipe structure assembly (25) with the filter (1) and the pipe (23) inside the casing (20) of the well (21);
e) continue threading pipes (23") on the free end of the last pipe (23') inside the casing (20) of the well (21), one after the other as the filter (1) is lowered to the working depth.

22. The procedure of claim 21, wherein it comprises coupling a pump (24) to the pipe structure (25).

23. The procedure of claims 21 or 22, wherein when the filter (1) is applied to the oil exploration, the pumping method is selected among: mechanical pumping (pumpjack), a progressive cavity pumping (PCP) or electric submersible pumping.

24. A pipe structure, wherein it comprises the following from the bottom of the well to the top: a reducer coupler (18), at least one tail pipe (19,22), at least one filter of solid particles (1) as claimed in any one of the claims 1 to 19, followed by an assembly of pipes (23,23',23"), wherein all the elements are joined together in fluid communication, and wherein the pipe structure (25) is connected to a pump (24) that pumps the fluid being extracted, which is installed in the appropriate place according to the pumping method used and the fluid extracted.

25. The pipe structure of claim 24, wherein the at least one tail pipe (19,22) is one or two pipes connected together reaching a length between 10 and 20 metres, with an internal diameter between 73 mm (2 7/8 inches) and 889 mm (3.5 inches), alternatively reaching a length of 30 metres by adding an additional pipe.

26. The pipe structure of claims 24 or 25, wherein the lower end of the tail pipes (19,22) is threaded to a reducer coupler with an internal diameter between 73 mm (2 7/8 inches) and 38.1 mm (1.5 inches), up to between 889 mm (3 1/2 inches) and 38.1 mm (1.5 inches)

**Patentansprüche**

1. Filter für feste Teilchen (1) für Öl, Gas und Wasser, der ein Kopfstück aufweist, umfassend:

ein Rohr (2), das im Wesentlichen resistent gegenüber chemischem und physischem Schaden ist, der von dem zu filternden Material bewirkt wird, wobei die Oberfläche des Rohrs eine Filtrationsfläche definiert, die eine Vielzahl von Perforationen (3) umfasst, die es dem Fluid ermöglichen, die Wand des Rohrs (2) zu passieren, wobei das Rohr (2) Muttern (4) an den Enden davon umfasst;

eine Vielzahl von aus einem Kunststoffmaterial bestehenden Filtrationsringen (5), die in konzentrischer Form auf der Filtrationsfläche des Rohrs (2) zusammengebaut sind, wobei die Ringe (5) parallel übereinander platziert sind, und wobei jeder der Ringe (5) eine Vielzahl von Innenverlängerungen (6) umfasst, die Abstützung an und Trennung von dem Rohr (2) bereitstellen, wobei ein Raum definiert wird, in dem das Fluid (7) zwischen den Innenrändern der Ringe (5) und der Oberfläche des Rohrs (2) umläuft, und wobei eine der Oberflächen jedes Rings (5) senkrechte Führungsverlängerungen (9) umfasst, die in entsprechende passende Perforationen (10) passen, die in den benachbarten Ringen (5) vorhanden sind, und wobei eine Vielzahl von Trägern (11) entlang des Umfangs auf einer Seite des Rings (5) verteilt ist, wobei die Höhe davon einen Trennungsabstand bereitstellt, der durch das einzufangende Teilchen bestimmt wird;

**dadurch gekennzeichnet, dass** der Filter ferner mindestens zwei Tragringe (12) umfasst, die an dem Rohr (2) montiert und an jedem Ende des Satzes von Filtrationsringen (5) platziert sind, wobei mindestens ein Abschnitt eingestellt und definiert wird, wobei jeder der Tragringe (12) an dem Rohr (2) durch Fixiermittel (13) eingestellt ist; und wobei mindestens ein Zwischentrennungsring (14) zwischen zwei Filtrationsringen des Satzes von Filtrationsringen (5) platziert ist und dazu konfiguriert ist, die Vielzahl von Filtrationsringen (5) in einen ersten und einen zweiten Untersatz von Filtrationsringen (5) zu trennen; und wobei der Zwischentrennungsring (14) an dem Rohr (2) durch Fixiermittel (15) eingestellt ist.

2. Filter nach Anspruch 1, wobei die Filtrationsfläche eine Länge zwischen 1000 mm und 1500 mm aufweist.

3. Filter nach einem der Ansprüche 1 bis 2, wobei das Rohr (2), die mindestens zwei Tragringe (12) und der mindestens eine Zwischentrennungsring (14) aus Eisen, Edelstahl, Kohlenstoffstahl, Bronze, Glasfaser, Polyesterharz, Polyvinylchlorid (PVC), Polypropylen (PP) und Kombinationen davon bestehen.

4. Filter nach Anspruch 3, wobei das Rohr (2), die mindestens zwei Tragringe (12) und der mindestens eine Zwischentrennungsring (14) aus 4140-Kohlenstoffstahl oder Edelstahl bestehen.

5. Filter nach Anspruch 3 oder 4, wobei, wenn das Rohr (2), die mindestens zwei Tragringe (12) und der mindestens eine Zwischentrennungsring (14) aus Eisen, Kohlenstoffstahl oder Bronze bestehen, sie mit einer Verkleidung abgedeckt sind, die aus Epoxiden, Acrylnitril-Butadien-Styrol (ABS), Polytetrafluorethylen (PTFE), Nylons, Vinyl und thermisch gehärteten Keramikverkleidungen ausgewählt ist.

6. Filter nach Anspruch 5, wobei die Epoxidverkleidung eine Epoxidphenolverkleidung ist.

7. Filter nach einem der Ansprüche 1 bis 6, wobei das Rohr (2) einen Innendurchmesser zwischen 19 mm (3/4 eines Zolls) und 508 mm (20 Zoll) aufweist.

8. Filter nach einem der vorhergehenden Ansprüche 1 bis 7, wobei die Perforationen (3) unter kreisförmigen Öffnungen, horizontalen Schlitzen, vertikalen Schlitzen, schrägen Schlitzen und Kombinationen davon ausgewählt sind.

9. Filter nach Anspruch 8, wobei das Verhältnis pro Laufmeter zwischen der Spanne der Perforationen (3) und dem Durchmesser des Rohrs (2) zwischen 2:1 und 8:1 liegt.

10. Filter nach einem der vorhergehenden Ansprüche 1 bis 9, wobei das Kunststoffmaterial, aus dem die Filtrationsringe (5) bestehen, aus Polypropylen, Polyamid und Polytetrafluorethylen ausgewählt wird.

11. Filter nach Anspruch 10, wobei das Polyamid Polyamid 6 (Grilon) oder Polyamid 66 ist.

12. Filter nach Anspruch 10 oder 11, wobei die Vielzahl von inneren Verlängerungen (6) der Filtrationsringe (5), die Abstützung an und Trennung von dem Rohr (2) bereitstellen, zwischen 3 und 10, vorzugsweise 4, beträgt.

13. Filter nach Anspruch 10 bis 12, wobei zwischen 2 und 5 senkrechte Führungsverlängerungen (9) vorhanden sind, die in entsprechende passende Perforationen (10) der benachbarten Ringe (5) passen, die auf den Innenverlängerungen (6) platziert sind, die Abstützung an und Trennung von dem Rohr (2) bereitstellen.

14. Filter nach Anspruch 10 bis 13, wobei die Vielzahl von Trägern (11), die entlang des Umfangs auf einer Seite der Filtrationsringe (5) verteilt sind, zwischen 5 und 10, vorzugsweise 8 beträgt.

15. Filter nach einem der Ansprüche 10 bis 14, wobei der Abstand zwischen den Filtrationsringen (5) zwischen 200 und 2000 Mikrometern, vorzugsweise 500 Mikrometern, beträgt.

16. Filter nach einem der Ansprüche 1 bis 15, wobei die Fixiermittel (13, 15) der mindestens zwei Tragringe (12) und des mindestens einen Zwischentrennungsrings (14) mindestens eine unverlierbare Schraube, vorzugsweise 3 bis 6 unverlierbare Schrauben, bevorzugter 4 unverlierbare Schrauben sind.

17. Filter nach Anspruch 16, wobei zusätzlich jedes Gehäuse der mindestens einen unverlierbaren Schraube mit einem auf Druck eingepassten, korrosionsschützenden Stopfen (17) verschlossen ist, der aus Polypropylen, Polyamid und Polytetrafluorethylen besteht.

18. Filter nach Anspruch 17, wobei das Polyamid Polyamid 6 (Grilon) oder Polyamid 66 ist.

19. Filter nach einem der Ansprüche 1 bis 18, wobei die Arbeitsbedingungen Temperaturen zwischen 50 °C (122 °F) und 150 °C (302 °F) sind.

20. Verfahren zum Zusammenbauen eines Filters für feste Teilchen (1) nach einem der Ansprüche 1 bis 19, wobei es Folgendes umfasst:

   Platzieren eines ersten Tragrings (12) an einem Ende eines Rohrs (2) mit einer perforierten Wand und Fixieren desselben an dem Rohr (2) durch Fixiermittel (13), die ein Ende einer Filtrationsfläche definieren;
   Platzieren einer Vielzahl von Filtrationsringen (5) an dem perforierten Rohr, die aufeinander liegen und ineinander passen, wobei der Satz von Filtrationsringen auf dem ersten Tragring (12) aufliegt, bis sie die gesamte Filtrationsfläche abdecken; und
   Platzieren eines weiteren Tragrings (12) auf dem letzten Filtrationsring und Einstellen desselben an dem perforierten Rohr (2) durch geeignete Fixiermittel (13)
   Platzieren mindestens eines Zwischentrennungsrings (14) zwei Filtrationsringe des Satzes von Filtrationsringen (5) und welcher dazu konfiguriert ist, die Vielzahl von Filtrationsringen (5) in einen ersten und einen zweiten Untersatz von Filtrationsringen (5) zu trennen, wobei der Zwischentrennungsring (14) an dem Rohr (12) durch geeignete Fixiermittel (15) eingestellt ist.

21. Verfahren zum Zusammenbauen einer Rohrstruktur innerhalb der Auskleidung eines Bohrlochs, um einen Filter für feste Teilchen (1) nach einem der Ansprüche 1 bis 19 zu installieren, wobei es folgende Schritte umfasst:

   a) Aufschrauben eines Reduzierverbinders (18) auf ein Ende eines ersten Endrohrs (19) und Einführen des Endrohrs (19) und des davor liegenden Verbinders (18) in die Auskleidung (20) eines Bohrlochs (21);
   b) Aufschrauben mindestens eines zweiten Endrohrs (22) auf das obere Ende des ersten Endrohrs (19) und Senken der Baugruppe aus zwei Endrohren (19, 22) mit dem Reduzierverbinder (18) am unteren Ende innerhalb der Auskleidung (20) des Bohrlochs (21);
   c) Aufschrauben des mindestens einen Filters für feste Teilchen (1) nach einem der Ansprüche 1 bis 19 auf das obere Ende der Baugruppe aus Endrohren (19, 22) und dem Reduzierverbinder (18);
   d) Aufschrauben eines Rohrs (23) an dem oberen Ende des Körpers des Filters (1) und Einführen der Rohrstrukturbaugruppe (25) mit dem Filter (1) und dem Rohr (23) in die Auskleidung (20) des Bohrlochs (21);
   e) Fortsetzen des Aufschraubens der Rohre (23") an dem freien Ende des letzten Rohres (23') innerhalb der Auskleidung (20) des Bohrlochs (21), eines nach dem anderen, während der Filter (1) auf die Arbeitstiefe gesenkt wird.

22. Verfahren nach Anspruch 21, wobei es das Koppeln einer Pumpe (24) mit der Rohrstruktur (25) umfasst.

23. Verfahren nach Anspruch 21 oder 22, wobei beim Anwenden des Filters (1) auf die Ölsuche, das Pumpverfahren aus Folgendem ausgewählt wird: mechanisches Pumpen (Tiefpumpe), Exzenterschneckenpumpen (PCP) oder elektrisches Unterwasserpumpen.

24. Rohrstruktur, wobei sie vom Boden des Bohrlochs bis zum oberen Ende Folgendes umfasst: einen Reduzierverbinder (18), mindestens ein Endrohr (19, 22), mindestens einen Filter für feste Teilchen (1) nach einem der Ansprüche 1 bis 19, gefolgt von einer Baugruppe von Rohren (23, 23', 23"), wobei alle Elemente in Fluidverbindung miteinander verbunden sind, und wobei die Rohrstruktur (25) mit einer Pumpe (24) verbunden ist, die das geförderte Fluid pumpt, die an der geeigneten Stelle gemäß dem verwendeten Pumpverfahren und dem geförderten Fluid installiert ist.

**25.** Rohrstruktur nach Anspruch 24, wobei das mindestens eine Endrohr (19, 22) ein oder zwei Rohre ist, die miteinander verbunden sind, wobei eine Länge zwischen 10 und 20 Metern erreicht wird, mit einem Innendurchmesser zwischen 73 mm (2 7/8 Zoll) und 889 mm (3,5 Zoll), wobei alternativ eine Länge von 30 Metern erreicht wird, indem ein zusätzliches Rohr hinzugefügt wird.

**26.** Rohrstruktur nach Anspruch 24 oder 25, wobei das untere Ende der Endrohre (19, 22) auf einen Reduzierverbinder mit einem Innendurchmesser zwischen 73 mm (2 118 Zoll) und 38,1 mm (1,5 Zoll) bis zu zwischen 889 mm (3 1/2 Zoll) und 38,1 mm (1,5 Zoll) aufgeschraubt ist.

**Revendications**

**1.** Filtre à particules solides (1) pour le pétrole, le gaz et l'eau, comprenant une tête composée de : un tuyau (2) très résistant aux attaques chimiques et physiques causées par le produit à filtrer, la surface dudit tuyau définissant une zone de filtration comprenant plusieurs perforations (3) qui permettent au fluide de passer à travers la paroi du tuyau (2), ledit tuyau (2) comportant des écrous (4) à ses extrémités ;

plusieurs anneaux de filtration (5) en matière plastique assemblés de manière concentrique sur la zone de filtration du tuyau (2), ces anneaux (5) étant placés en parallèle les uns aux autres, et chacun des anneaux (5) comprend plusieurs extensions internes (6) fournissant un support et une séparation du tuyau (2), définissant un espace pour le fluide (7) afin de circuler entre les bords intérieurs des anneaux (5) et la surface du tuyau (2), et l'une des surfaces de chaque anneau (5) comprend des extensions de guidage perpendiculaires (9) qui s'insèrent dans les perforations d'ajustement correspondantes (10) présentes dans les anneaux (5) voisins, et plusieurs supports (11) répartis le long du périmètre d'un côté de l'anneau (5), leur hauteur assurant une distance de séparation déterminée par les particules à piéger ;
**caractérisé par le fait que** le filtre comprend également au moins deux anneaux de support (12) montés sur le tuyau (2) et placés à chaque extrémité de l'ensemble des anneaux de filtration (5), ajustant et définissant au moins une section, dans laquelle chacun desdits anneaux de support (12) est ajusté sur le tuyau (2) par des moyens de fixation (13) ; et au moins un anneau de séparation intermédiaire (14) placé entre deux anneaux de filtration de l'ensemble des anneaux de filtration (5) et configuré pour séparer plusieurs anneaux de filtration (5) en un premier et un second sous-ensemble d'anneaux de filtration (5) ; et où ledit anneau de séparation intermédiaire (14) est ajusté sur le tuyau (2) par des moyens de fixation (15).

**2.** Le filtre de la revendication 1, dans lequel la zone de filtration a une longueur comprise entre 1000 mm et 1500 mm.

**3.** Le filtre de l'une des revendications 1 à 2, où le tuyau (2), au moins deux anneaux de support (12) et au moins un anneau de séparation intermédiaire (14) sont en fer, en acier inoxydable, en acier au carbone, en bronze, en fibre de verre, en résine de polyester, en chlorure de polyvinyle (PVC), en polypropylène (PP), et des combinaisons de ces matériaux.

**4.** Le filtre de la revendication 3, où le tuyau (2), au moins deux anneaux de support (12) et au moins un anneau de séparation intermédiaire (14) sont en acier au carbone 4140 ou en acier inoxydable.

**5.** Le filtre des revendications 3 ou 4, dans lequel le tuyau (2), au moins deux anneaux de support (12) et au moins un anneau de séparation intermédiaire (14) sont en fer, en acier au carbone ou en bronze, ils sont recouverts d'un revêtement choisi entre les époxydes, l'acrylonitrile butadiène styrène (ABS), le polytétrafluoroéthylène (PTFE), les nylons, le vinyle et les revêtements céramiques thermodurcis.

**6.** Le filtre de la revendication 5, dans lequel le revêtement époxy est un revêtement époxy-phénolique.

**7.** Le filtre de l'une des revendications 1 à 6, où le tuyau (2) a un diamètre interne compris entre 19 mm (3/4 de pouce) et 508 mm (20 pouces).

**8.** Le filtre de l'une des revendications 1 à 7, où les perforations (3) sont choisies entre les orifices circulaires, les fentes horizontales, les fentes verticales, les fentes obliques et leurs combinaisons.

9.   Le filtre de la revendication 8, où le rapport par mètre linéaire entre la portée des perforations (3) et le diamètre du tuyau (2) est compris entre 2 pour 1 et 8 pour 1.

10.  Le filtre de l'une des revendications précédentes 1 à 9, où la matière plastique des anneaux de filtration (5) est choisie entre le polypropylène, le polyamide et le polytétrafluoroéthylène.

11.  Le filtre de la revendication 10, dans lequel le polyamide est le polyamide 6 (Grilon) ou le polyamide 66.

12.  Le filtre des revendications 10 ou 11, dans lequel les différentes extensions internes (6) des anneaux de filtration (5) assurent le support et la séparation du tuyau (2) et sont comprises entre 3 et 10, de préférence 4.

13.  Le filtre des revendications 10 à 12, dans lequel entre 2 et 5 extensions de guidage perpendiculaires (9) s'insèrent dans les perforations d'ajustement correspondantes (10) des anneaux voisins (5), sur les extensions internes (6) assurant le support et la séparation du tuyau (2).

14.  Le filtre des revendications 10 à 13, dans lequel les différents supports (11) répartis le long du périmètre d'un côté des anneaux de filtration (5) sont compris entre 5 et 10, de préférence 8.

15.  Le filtre de l'une des revendications 10 à 14, dans lequel la séparation entre les anneaux de filtration (5) est comprise entre 200 et 2000 microns, de préférence 500 microns.

16.  Le filtre de l'une des revendications 1 à 15, dans lequel les moyens de fixation (13,15) d'au moins deux anneaux de support (12) et au moins un anneau de séparation intermédiaire (14) sont au moins une vis captive, de préférence 3 à 6 vis captives, plus de préférence 4 vis captives.

17.  Le filtre de la revendication 16, dans lequel, également, chaque logement d'au moins une vis captive est fermé par un bouchon de protection contre la corrosion (17), qui est fait de polypropylène, de polyamide et de polytétrafluoroéthylène et qui est monté sous pression.

18.  Le filtre de la revendication 17, dans lequel le polyamide est le polyamide 6 (Grilon) ou le polyamide 66.

19.  Le filtre de l'une des revendications 1 à 18, dont les conditions de fonctionnement sont des températures comprises entre 50 °C (122 °F) et 150 °C (302 °F).

20.  Procédé d'assemblage d'un filtre à particules solides (1) selon l'une des revendications 1 à 19 comprenant :

   placer un premier anneau de support (12) sur une extrémité d'un tuyau (2) à paroi perforée et le fixer à ce tuyau (2) par des moyens de fixation (13), définissant une extrémité d'une zone de filtration ;
   placer plusieurs anneaux de filtration (5) sur le tuyau perforé qui reposent les uns sur les autres et s'emboîtent, et l'ensemble des anneaux de filtration reposant sur le premier anneau de support (12) jusqu'à ce qu'ils couvrent la totalité de la zone de filtration ; et
   placer un autre anneau de support (12) sur le dernier anneau de filtration et l'ajuster sur le tuyau perforé (2) par des moyens de fixation appropriés (13)
   placer au moins un anneau de séparation intermédiaire (14) deux anneaux de filtration de l'ensemble d'anneaux de filtration (5) et configuré pour séparer les différents anneaux de filtration (5) en un premier et un second sous-ensemble d'anneaux de filtration (5), ledit anneau de séparation intermédiaire (14) étant ajusté sur le tuyau (12) par des moyens de fixation appropriés (15).

21.  Procédé d'assemblage d'une structure tubulaire à l'intérieur du tubage d'un puits pour installer un filtre à particules solides (1) selon l'une des revendications 1 à 19, comprenant les étapes suivantes :

   a) visser un raccord réducteur (18) sur une extrémité d'un premier tube-queue (19) et introduire ledit tube-queue (19), et ledit raccord (18) à l'avant, à l'intérieur du tubage (20) d'un puits (21) ;
   b) visser au moins un deuxième tube-queue (22) sur l'extrémité supérieure du premier tube-queue (19) et abaisser l'ensemble des deux tubes-queues (19,22) avec le raccord réducteur (18) à l'extrémité inférieure à l'intérieur du tubage (20) du puits (21) ;

c) visser au moins un filtre à particules solides (1) tel que décrit dans l'une des revendications 1 à 19 sur l'extrémité supérieure de l'ensemble des tubes-queues (19,22) et du raccord réducteur (18) ;

d) visser un tuyau (23) sur l'extrémité supérieure du corps du filtre (1) et introduire ledit assemblage de structure tubulaire (25) avec le filtre (1) et le tuyau (23) à l'intérieur du tubage (20) du puits (21) ;

e) poursuivre le vissage des tuyaux (23") sur l'extrémité libre du dernier tuyau (23') à l'intérieur du tubage (20) du puits (21), l'un après l'autre, au fur et à mesure que le filtre (1) descend à la profondeur de travail.

22. Le procédé de la revendication 21 comprenant le couplage d'une pompe (24) à la structure tubulaire (25).

23. Le procédé des revendications 21 ou 22, dans lequel lorsque le filtre (1) est appliqué à l'exploration pétrolière, la méthode de pompage est choisie parmi : le pompage mécanique (pumpjack), le pompage à cavité progressive (PCP) ou le pompage électrique submersible.

24. Structure tubulaire comprenant les éléments suivants, du fond du puits jusqu'au sommet : un raccord réducteur (18), au moins un tube-queue (19,22), au moins un filtre à particules solides (1) tel que décrit dans l'une des revendications 1 à 19, suivi d'un assemblage de tuyaux (23,23',23"), dans lequel tous les éléments sont reliés entre eux en communication fluidique, et dans lequel la structure tubulaire (25) est connectée à une pompe (24) qui pompe le fluide extrait, qui est installée à l'endroit approprié en fonction de la méthode de pompage utilisée et du fluide extrait.

25. La structure tubulaire de la revendication 24, dans laquelle au moins un tube-queue (19,22) est constitué d'un ou de deux tuyaux connectés ensemble atteignant une longueur comprise entre 10 et 20 mètres, avec un diamètre interne compris entre 73 mm (2 7/8 pouces) et 889 mm (3,5 pouces), pouvant également atteindre une longueur de 30 mètres par l'ajout d'un tuyau supplémentaire.

26. La structure tubulaire des revendications 24 ou 25, dans laquelle l'extrémité inférieure des tubes-queues 'i (19,22) est vissée à un raccord réducteur dont le diamètre interne est compris entre 73 mm (2 7/8 pouces) et 38,1 mm (1,5 pouces) et jusqu'à entre 889 mm (3 1/2 pouces) et 38,1 mm (1,5 pouces)

Fig. 1

Fig. 2

Fig. 3

Fig. 4

Fig. 5

Fig. 6

Fig. 7

Fig. 8

Fig. 9

Fig. 10

## REFERENCES CITED IN THE DESCRIPTION

**Patent documents cited in the description**

- AR 055317 A1

- WO 2017030700 A